# EUROPEAN PATENT APPLICATION

(11) **EP 1 674 438 A1**
(43) Date of publication of application: **28.06.2006**
(21) Application number: 05025913.4
(22) Date of filing: 28.11.2005
(51) Int. Cl.: C04B 38/00, C04B 35/591, C04B 35/584

(54) **Method for producing silicon nitride honeycomb filter**

(30) Priority: 02.12.2004 JP 2004350011
(71) Applicant: Asahi Glass Company, Limited, Tokyo 100-8405 (JP)
(72) Inventor: Shinohara, Nobuhiro, Kanagawa-ku Yokohama-shi Kanagawa (JP); Miyakawa, Naomichi, Kanagawa-ku Yokohama-shi Kanagawa (JP); Watanabe, Toshinari, Kanagawa-ku Yokohama-shi Kanagawa (JP)
(74) Representative: Müller-Boré & Partner Patentanwälte

(57) **Abstract**

To provide a method for producing a silicon nitride honeycomb filter having a pore size and porosity most suitable for collection or removal of dust, by using metal silicon particles as the starting material. The method comprises heat-treating in a nitrogen atmosphere a green body comprising metal silicon particles and oxide ceramic hollow particles to convert metal silicon substantially to silicon nitride, wherein inorganic particles which react with the oxide ceramic hollow particles to form a melt in the step of the heat-treatment, are incorporated in the green body in an amount sufficient to substantially prevent the oxide ceramic hollow particles from remaining in the form as they are.

## Description

The present invention relates to a method for producing a silicon nitride honeycomb filter suitable as a honeycomb filter to be used for removing powder dust, etc. contained in a high temperature exhaust gas.

Silicon nitride has characteristics excellent in heat resistance, corrosion resistance, chemical resistance, mechanical strength, etc. and is expected to be useful for a filter (hereinafter referred to as DPF) for removal of fine particles (hereinafter referred to as particulates) discharged from a diesel engine or for a filter for collection or removal of dust under a high temperature or corrosive environment. Methods for producing such silicon nitride filters may generally be classified on the basis of starting materials into a production method wherein silicon nitride particles are used as the starting material and a production method wherein metal silicon particles are used as the starting material and converted to silicon nitride by direct nitriding (JP-A-52-121613, WO01/47833). The production method wherein metal silicon particles are used as the starting material, has a characteristic such that the material cost is usually low as compared with a production method wherein silicon nitride particles are used as the starting material, and thus it is superior from the viewpoint of the production cost.

As a conventional technique for the production method wherein metal silicon is used as the starting material, a method has been proposed wherein a green body prepared by using a fine metal silicon powder, is subjected to nitriding treatment to obtain a silicon nitride porous body (JP-A-52-121613). However, in order to obtain a porous body having a high porosity, it is necessary to carry out nitriding treatment of a metal silicon green body having a low green body density. In such a case, fine silicon nitride fibers are likely to be formed at the surface or interior, whereby the product is likely to be a porous body having a small average pore diameter (hereinafter, the pore diameter will be referred to simply as a pore size).

As a means to solve such a problem, a method has been proposed to obtain a silicon nitride porous body having an average pore size of from 5 to 40 µm by heat-treating a green body comprising metal silicon particles and inorganic hollow particles, in nitrogen (WO01/47833).

By the conventional method, depending upon the production conditions or the material for the inorganic hollow particles, the inorganic hollow particles are likely to react with nitrogen in the process for nitriding treatment to form a nitrogen-containing compound having a high melting point and thus remain in the form of hollow particles, whereby a porous body may not be obtained which has a large porosity and a large average pore size simultaneously and yet has a pore distribution such that pores having small particle sizes are little. Accordingly, it is an object of the present invention to provide a silicon nitride honeycomb filter which has a large porosity and a large pore size simultaneously and yet has a pore distribution such that pores having small pore sizes are little and which has a low pressure loss and is suitable as DPF, and a method for its production.

The present invention provides a method for producing a silicon nitride honeycomb filter, which comprises heat-treating in a nitrogen atmosphere a green body comprising metal silicon particles and oxide ceramic hollow particles to convert metal silicon substantially to silicon nitride, wherein inorganic particles which react with the oxide ceramic hollow particles to form a melt in the step of the heat-treatment, are incorporated in the green body in an amount sufficient to substantially prevent the oxide ceramic hollow particles from remaining in the form as they are.

Further, the present invention provides a silicon nitride honeycomb filter, which has a porosity of from 50 to 80% and an average pore diameter of from 15 to 30 µm as measured by a mercury injection method, wherein the total of pore volumes of pores having pore diameters of at least 5 µm, is at least 80% of the total of pore volumes of all pores, and oxide ceramic hollow particles do not substantially remain in the form as they are.

By the method of the present invention, a silicon nitride honeycomb filter suitable for removing or collecting dust can easily be produced. The silicon nitride honeycomb filter obtainable by the present invention is excellent in accuracy of form, has high strength and also has an average pore size and a porosity which are suitable for collecting e.g. particulates and which makes it possible to reduce the pressure loss. Thus, it is suitable for a filter, particularly for DPF required to have strength, heat resistance, corrosion resistance, durability, etc.

Now, the present invention will be described in detail with reference to the preferred embodiments.

The method for producing a silicon nitride honeycomb filter of the present invention (hereinafter referred to as the method of the present invention) is a method for producing a silicon nitride honeycomb filter, which comprises heat-treating in a nitrogen atmosphere a green body comprising metal silicon particles and oxide ceramic hollow particles (hereinafter referred to simply as hollow particles) to convert metal silicon substantially to silicon nitride, wherein inorganic particles to prevent the hollow particles from remaining in the form as they are in the step of the above heat treatment, are incorporated in the green body.

The method of the present invention is based on a discovery by the present inventors such that if hollow particles will remain in the form as they are in a silicon nitride honeycomb filter (hereinafter referred to simply as a honeycomb filter) obtainable by heat treating the green body comprising the metal silicon particles and the hollow particles, the porosity or the average pore size of the honeycomb filter may sometimes become small.

As to why the porosity or the average pore size becomes small if the hollow particles will remain in the form as they are in the honeycomb filter, the detailed mechanism is not clearly understood. However, it is considered that if the hollow particles will remain in the form as they are, pore portions in the hollow particles are likely to form closed pores which do not function as a filter, or formation of connected open pores tends to be prevented. Here, "will remain in the form as they are" means that when the structure is observed, the hollow particles remain in a state where they maintain the initial form.

The method of the present invention is characterized in that inorganic particles to prevent the hollow particles from remaining in the form as they are, are incorporated in the green body. Such inorganic particles are preferably those which react with the hollow particles in the step of the heat-treatment to form a melt (liquid phase), since the form of the hollow particles will change. Here, the formation of a melt may take place locally. Such a melt is more preferably formed in a temperature range where metal silicon is nitrided to silicon nitride. It is particularly preferred that such a melt is formed at a temperature lower than the temperature (about 1,350°C) at which the nitriding proceeds most efficiently.

Namely, it is considered that, for example, when hollow particles contain SiO₂, if no melt is formed in the temperature range for nitriding, the outer skin (shell) of the hollow particles are likely to react with the surrounding metal silicon and nitrogen gas to form Si₂ON₂ which has a decomposition temperature of at least 1,700°C, and once Si₂ON₂ is formed in the outer skin, the hollow particles may remain while maintaining the form as they are.

On the basis of the discovery as described above, the present invention provides a production method wherein the hollow particles and the specific inorganic particles are reacted in the step of the heat-treatment so that the hollow particles will not remain in the form as they are, in the honeycomb filter.

In the method of the present invention, the hollow particles are of an oxide, and to form a melt in the step of the heat-treatment, the inorganic particles are preferably oxide particles or oxide-precursor particles. The function of such oxide particles or oxide-precursor particles is not particularly limited so long as they are capable of reacting with the hollow particles to form a melt, and they may have a function to accelerate nitriding of metal silicon particles or to accelerate sintering of silicon nitride particles formed by the nitriding.

Such oxide particles are preferably oxide particles of at least one element selected from the group consisting of Mg, Ca, Sr, Ba, Ti, Zr, Hf, Si, Al, Fe and lanthanide elements, since, when reacted with the hollow particles, they tend to readily form a compound having a low melting point. Specific examples of such an oxide include MgO, CaO, SrO, BaO, TiO₂, ZrO₂, HfO₂, SiO₂, Al₂O₃, Fe₂O₃, Y₂O₃, Nd₂O₃ and Sm₂O₃. Further, the oxide may be a composite oxide such as spinel (MgO·Al₂O₃) or forsterite (2MgO·SiO₂).

In the method of the present invention, the above-mentioned oxide-precursor particles are preferably an inorganic acid salt, an organic acid salt or a hydroxide which will form the above-mentioned oxide particles. As such an inorganic acid salt, a nitrate, a carbonate, a sulfate or a chloride may be mentioned as a preferred example. Further, as the above organic acid salt, a carboxylate may, for example, be mentioned as a preferred example.

In the method of the present invention, it is further preferred to use, as the inorganic particles, a combination of plural types of the above-mentioned oxide particles or oxide-precursor particles, whereby formation of the melt with the hollow particles can be carried out at a lower temperature. As such a combination of inorganic particles, a combination of two types such as MgO particles or MgO precursor particles (both of them will be generally referred to as MgO analogue particles, the same applies hereinafter) and CaO analogue particles, or MgO analogue particles and Y₂O₃ analogue particles, a combination of three types such as MgO analogue particles, CaO analogue particles and TiO₂ analogue particles, or a combination of four types such as MgO analogue particles, CaO analogue particles, Y₂O₃ analogue particles and TiO₂ analogue particles, may be mentioned as a preferred example.

With respect to the amount of the inorganic particles to be incorporated, if the amount becomes too much, the amount of a liquid phase formed during the heat treatment tends to be too much, whereby the porosity or pore size of the filter tends to be small, or deformation of the filter is likely to be brought about, such being undesirable. The amount of the inorganic particles to be incorporated is preferably from 15 to 50 mass%, more preferably from 20 to 45 mass%, based on the amount of the hollow particles, as calculated as oxides. Further, the amount of the inorganic particles to be incorporated, is preferably at most 12 mass% based on the metal silicon particles, whereby the porosity or pore size will not be substantially impaired, particularly preferably at most 10 mass%. Here, in a case where plural types of inorganic particles are employed, said amount is their total amount.

In the method of the present invention, the hollow particles may be any particles so long as they are hollow oxide ceramic particles, which form pores at the time of the heat-treatment and serve as a sintering assistant for the silicon nitride particles formed in the step of the heat-treatment. The hollow particles may be dense or porous at the portion corresponding to the outer skin, so long as they are hollow. Further, the hollow particles preferably has a contour being spherical, since spherical particles are readily available, but so long as they are hollow, they may be particles other than spherical particles.

The oxide for the hollow particles may be crystalline or amorphous, or may contain both crystalline and amorphous oxides. The oxide for the hollow particles preferably contain no or at most 1 mass% of an alkali component (Na₂O, K₂O), such being preferred as the high temperature characteristics are thereby good. Accordingly, it is preferred that the softening point or the liquid phase-forming temperature of the hollow particles is at least 1,500°C as measured with the hollow particles alone, whereby the high temperature characteristics will be excellent. For example, the hollow particles preferably contain Al₂O₃ and/or SiO₂ as the main component, from the viewpoint of the availability, the cost, etc., or since the high temperature characteristics of the honeycomb filter will not be thereby impaired.

In a case where the hollow particles contain Al₂O₃ and/or SiO₂ as the main component, the inorganic particles are preferably ones containing MgO analogue particles and CaO analogue particles, whereby the temperature for forming the melt can be lowered, and yet, it is possible to obtain an effect to prevent evaporation of MgO analogue particles. The inorganic particles are more preferably ones containing Y₂O₃ analogue particles in addition to MgO analogue particles and CaO analogue particles, whereby the temperature for forming the melt can be further lowered, and yet, it is also possible to improve the strength. The inorganic particles are particularly preferably ones containing TiO₂ analogue particles in addition to MgO analogue particles, CaO analogue particles and Y₂O₃ analogue particles, i.e. ones containing MgO analogue particles, CaO analogue particles, Y₂O₃ analogue particles and TiO₂ analogue particles, whereby it is also possible to obtain an effect to prevent carbon from remaining.

In the method of the present invention, the average particle diameter (hereinafter referred to simply as the average particle size) of the hollow particles is preferably from 20 to 80 µm. If the average particle size of the hollow particles is less than 20 µm, the pore size tends to be too small. On the other hand, if the average particle size exceeds 80 µm, the obtainable pore size tends to be too large, whereby the strength of the honeycomb filter tends to be low.

In the method of the present invention, organic polymer particles may be used in combination with the hollow particles in order to supplement the function to form pores of the hollow particles. As such organic polymer particles, it is preferred to use a powder having an average particle size of from 5 to 90 µm, whereby the porosity or average pore size of the honeycomb filter will not be impaired. The organic polymer is not particularly limited, but is preferably one not containing elements other than carbon, hydrogen, nitrogen and oxygen, in the interior, since the amount remaining as e.g. carbon will be small. The polymer may specifically be, for example, a polyethylene resin, a polypropylene resin, a polystyrene resin, an acrylic resin, a polyethylene terephthalate resin, a polycarbonate resin or a phenol resin. Among them, it is particularly preferred to use acrylic resin particles as a pore-forming agent, whereby the thermal decomposition will be facilitated, and the amount remaining as carbon will be small. As the organic polymer, plural types of such resin particles may be used in combination.

In the method of the present invention, the green body contains metal silicon particles in addition to the hollow particles and the inorganic particles. The metal silicon particles are not particularly limited and may be suitably selected depending upon the characteristics, cost, etc. The purity of the metal silicon particles may suitably be selected depending upon the particular purpose and application.

The average particle size of the metal silicon particles is preferably from 5 to 50 µm. If the average particle size of the metal silicon particles is less than 5 µm, the pore size tends to be too small, thus leading to a decrease in the honeycomb filter function or an increase in the pressure loss. On the other hand, if the average particle size of the metal silicon particles exceeds 50 µm, although the porosity and the pore size may increase, it tends to be difficult to obtain sufficient strength.

In the method of the present invention, the green body preferably contains from 43 to 68 mass% of the metal silicon particles. If the content of the metal silicon particles is less than 43 mass%, the heat resistance, corrosion resistance, chemical resistance, mechanical strength, etc. of the honeycomb filter tend to be lower than the desired levels. On the other hand, if the content of the metal silicon particles exceeds 68 mass%, the amount of the pore-forming agent tends to be too small, whereby the characteristics such as the porosity and the average pore size are likely to be smaller than the desired levels.

The content of the hollow particles is preferably from 10 to 35 mass% in the green body. If the content is less than 10 mass%, the proportion of pores performing the filter function tends to be inadequate. On the other hand, if the content exceeds 35 mass%, although the pore size and porosity of the filter may increase, it tends to be difficult to obtain sufficient strength.

In the method of the present invention, it is preferred that the green body comprises from 43 to 68 mass% of metal silicon particles having an average particle size of from 5 to 50 µm and from 10 to 35 mass% of hollow particles having an average particle size of from 20 to 80 µm, and the total amount of the metal silicon particles, the hollow particles and the inorganic particles, is at least 80 mass%, whereby it is possible to obtain sufficient strength characteristics, etc. In this specification, the content in the green body is as calculated as the solid content. However, one which is a liquid organic substance at room temperature and which remains in the green body even when dried, will be included in the solid content.

The blend ratio of the metal silicon particles and the hollow particles, is preferably within such a range that by volume, the metal silicon particles are from 30 to 60 vol%, and the hollow particles are from 40 to 70 vol%. Such a blend ratio is more preferably such that the metal silicon particles are from 35 to 50 vol%, and the hollow particles are from 50 to 65 vol%.

In the method of the present invention, a common mixing means such as a ball mill or a mixer may be used for mixing of the metal silicon particles with the hollow particles and the metal oxide particles. As a method for preparing a honeycomb green body, water, an organic solvent, a molding assistant such as an organic binder, etc. may optionally be added to the above mixed material, followed by kneading to obtain a molding material, which is then molded by e.g. extrusion molding.

As such an organic binder, an organic substance may be used such as polyvinyl alcohol or its modified product, starch or its modified product, carboxymethyl cellulose, hydroxymethyl cellulose, polyvinyl pyrrolidone, an acrylic resin or acrylic copolymer, a vinyl acetate resin or vinyl acetate copolymer, polyethylene glycol, polypropylene glycol, or glycerol.

The molding assistant such as the above organic binder is removed by degreasing. Such degreasing is preferably carried out at a temperature lower than the melting temperature of metal silicon, and is preferably carried out by maintaining the green body at a temperature of from 300 to 900°C. The atmosphere for the degreasing may be an oxidizing atmosphere such as in the atmospheric air, or an inert atmosphere such as nitrogen gas or Ar gas. In a case where the degreasing is carried out in the atmospheric air, care should be taken so that the surface of the metal silicon particles or the silicon nitride particles will not excessively be oxidized. The degreasing may be carried out as a step separate from the after-mentioned first step of heat treatment, but degreasing may be carried out during the temperature rise in the first step of heat-treatment.

As the conditions for heat treatment of the above green body, it is preferred to divide the heat treatment in two steps in a nitrogen atmosphere i.e. a first step suitable for nitriding the metal silicon particles and a second step suitable for sintering of silicon nitride particles as the formed nitride.

As the heat treatment conditions for the first step, it is preferred to maintain the green body for from 1 to 24 hours at a temperature within a range of from 1,200 to 1,350°C and at least the melting point of the ceramic hollow particles in a nitrogen atmosphere. If the temperature is lower than 1,200°C, no nitriding of the metal silicon particles will take place, and on the other hand, if the temperature exceeds 1,350°C, the metal silicon particles will be fused, and the shape of a sintered product may not be maintained in the vicinity of the melting point (1,410°C) of the metal silicon. If the temperature maintaining time is less than 3 hours, nitriding of the metal silicon particles tends to be inadequate, such being undesirable. On the other hand, if the temperature maintaining time exceeds 24 hours, the nitriding reaction no more substantially proceeds, and the operation cost will increase, such being undesirable.

As the heat treatment conditions for the second step, it is preferred to maintain the green body for from 1 to 12 hours at a temperature of from 1,600 to 1,800°C in a nitrogen atmosphere. If the temperature is lower than 1,600°C, no sintering of the silicon nitride particles will proceed, such being undesirable, and if it exceeds 1,800°C, the silicon nitride particles will be decomposed, such being undesirable. If the temperature maintaining time is less than one hour, bonding of the particles to one another will not sufficiently proceed, such being undesirable. On the other hand, if it exceeds 12 hours, especially at a high temperature, silicon nitride is susceptible to decomposition, such being undesirable.

The heat treatment of the first step or the heat treatment of the second step may be carried out continuously without lowering the temperature or by lowering the temperature once at an intermediate stage. Further, the temperature raising rate for the heat treatment may suitably be selected depending upon the size, the shape, etc. of the green body, but is usually preferably from 50 to 600°C/hr from the viewpoint of the nitriding rate and the pore size. Even in the temperature raising process, if the temperature is within the temperature range stipulated for the first step or the second step, such a time passed will be counted as the retention time in the first step or the second step, respectively.

Here, the nitrogen atmosphere is meant for an atmosphere containing substantially nitrogen only without containing oxygen, but it may contain other inert gases. The nitrogen partial pressure is preferably at least 50 kPa.

The average pore size measured by a mercury injection method of the honeycomb filter obtainable by the method of the present invention is preferably from 15 to 30 µm. If the average pore size is less than 15 µm, when a catalyst or the like is supported on the honeycomb filter, the pore size of the honeycomb filter tends to be too small, and the pressure loss of the honeycomb filter during the use tends to be large, such being undesirable. If the average pore size exceeds 30 µm, even if a catalyst or the like is supported on the honeycomb filter, the average pore size tends to be still too large, whereby capturing of fine particles such as diesel particulates tends to be difficult, such being undesirable.

The porosity as measured by a mercury injection method of the honeycomb filter obtainable by the method of the present invention is preferably from 50 to 80%. If the porosity is less than 50%, when a catalyst or the like is supported on the honeycomb filter, the pressure loss of the honeycomb filter tends to be too large, such being undesirable. On the other hand, if the porosity exceeds 80%, the mechanical strength of the honeycomb filter tends to be too low, such being undesirable. The porosity is more preferably at least 55%, and the porosity is particularly preferably at least 60%.

Further, the ratio of the total of pore volumes of pores having pore sizes of at least 5 µm, based on the total of pore volumes of all pores (hereinafter referred to as the at least 5 µm pore ratio) is preferably at least 80%, whereby even when a catalyst or the like is supported, the pressure loss of the honeycomb filter can be made small. Pores having a pore size of less than 5 µm have little contribution to the gas flow and thus has little effect to reduce the pressure loss. It is more preferred that the porosity is from 60 to 80%, and the at least 5 µm pore ratio is at least 80%, such being suitable as DPF.

Now, the present invention will be described with reference to Examples (Examples 1 to 6) and Comparative Example (Example 7). Here, the pore characteristics were measured by a mercury porosimeter (tradename: AutoSCAN-33, manufactured by Yuasa Ionics Inc.)

### EXAMPLES 1 to 6

Metal silicon particles having an average particle size of 20 µm (manufactured by ELKEM Company), alumina/silica hollow particles having an average particle size of 45 µm (tradename: SL75, manufactured by Taiheiyo Cement Corporation), Mg(OH)₂ powder as a MgO source, CaCO₃ powder as a CaO source, Y₂O₃ powder, TiO₂ powder, and, as molding assistants, methyl cellulose and glycerol (mass ratio of methyl cellulose/glycerol=12 to 16/1 to 2) were weighed in a blend ratio as shown in Table 1, and based on the total amount thereof, from 40 to 50 mass% of water was added, followed by mixing by a kneader to obtain a material for extrusion molding.

Further, as a pore-forming agent other than the hollow particles, as shown in Table 1, polyacrylic organic polymer particles having an average particle size of 10 µm (tradename: MR10G, manufactured by Soken Chemical & Engineering Co., Ltd.), organic polymer particles having an average particle size of 60 µm obtained by pulverizing a commercially available methacrylic resin (tradename: Parapet, manufactured by Kuraray Co., Ltd.) or polyacrylonitrile hollow spherical particles having an average particle size of 30 µm (tradename: MFL-100SCA, manufactured by Matsumoto Yushi-Seiyaku Co., Ltd.) were added.

The obtained extrusion molding material was molded into a honeycomb green body by a screw type continuous extrusion molding machine. The obtained honeycomb green body was heated to 500°C at a rate of 2°C/min and held for one hour, and after removing the organic polymer particles and the molding assistants, heated to 1,350°C at a rate of 2°C/min and held for 3 hours, then heated to 1,700°C at a rate of 2°C/min and held for 3 hours, to obtain a honeycomb filter. With respect to the honeycomb filter, various physical properties were measured, and the results are shown also in Table 1. Further, the structure was observed by a microscope, and hollow particles remaining in the form as they were, were not observed.

### EXAMPLE 7

A honeycomb filter was obtained by molding and firing in the same manner as in Example 1 except that in Example 1, no metal oxide powder was added. The pore characteristics of the obtained honeycomb filter were measured, whereby each of the pore size and the content of pores of at least 5 µm was low, and the performance as a filter was not sufficient. Further, the structure was observed by a microscope, whereby it was observed that the hollow particles remained substantially in the form as they were in the honeycomb structure, and particles of a whisker form grown in the vicinity of the hollow particles were observed.

**TABLE 1**

| | Ex. 1 | Ex. 2 | Ex. 3 | Ex. 4 | Ex. 5 | Ex. 6 |
|---|---|---|---|---|---|---|
| Metal silicon particles (mass%) | 62.6 | 56.0 | 51.5 | 61.1 | 52.1 | 61.9 |
| Hollow particles (mass%) | 18.9 | 24.6 | 22.6 | 18.4 | 12.5 | 16.4 |
| MR10G (mass%) | - | - | 3.4 | - | - | - |
| Pulverized powder of Parapet (mass%) | - | - | - | - | 15.7 | - |
| MFL-100SCA (mass%) | - | - | - | - | - | 1.6 |
| MgO (mass%) | 2.0 | 2.5 | 2.4 | 2.1 | 1.7 | 1.5 |
| CaO (mass%) | 1.5 | 2.0 | 1.8 | 2.4 | 1.0 | 0.7 |
| Y₂O₃ (mass%) | 1.0 | 0.9 | 0.9 | 1.0 | 1.3 | 1.0 |
| TiO₂ (mass%) | - | - | - | 1.2 | 0.7 | 0.9 |
| Molding assistants (mass%) | 14.0 | 14.0 | 17.4 | 13.8 | 15.0 | 16.0 |
| Average pore size (µm) | 25 | 20 | 19 | 24 | 23 | 20 |
| Porosity (%) | 63 | 60 | 63 | 73 | 65 | 56 |
| At least 5 µm pore ratio (%) | 88 | 94 | 96 | 82 | 96 | 98 |

### INDUSTRIAL APPLICABILITY

The honeycomb filter obtainable by the present invention is excellent in accuracy of form and has a pore size and a porosity suitable for collecting diesel particulates, etc. Yet, the pressure loss can be reduced. Therefore, it is suitable for use as DPF which is required to have strength, heat resistance, corrosion resistance, durability, etc.

The entire disclosure of Japanese Patent Application No. 2004-350011 filed on December 2, 2004 including specification, claims and summary is incorporated herein by reference in its entirety.

## Claims

1. A method for producing a silicon nitride honeycomb filter, which comprises heat-treating in a nitrogen atmosphere a green body comprising metal silicon particles and oxide ceramic hollow particles to convert metal silicon substantially to silicon nitride, wherein inorganic particles which react with the oxide ceramic hollow particles to form a melt in the step of the heat-treatment, are incorporated in the green body in an amount sufficient to substantially prevent the oxide ceramic hollow particles from remaining in the form as they are.

2. The method for producing a silicon nitride honeycomb filter according to Claim 1, wherein the amount of the inorganic particles to be incorporated is from 15 to 50 mass%, as calculated as oxides, based on the oxide ceramic hollow particles to be incorporated.

3. The method for producing a silicon nitride honeycomb filter according to Claim 1 or 2, wherein the inorganic particles are a combination of plural types of oxide particles or oxide-precursor particles containing at least one element selected from the group consisting of Mg, Ca, Sr, Ba, Ti, Zr, Hf, Si, Al, Fe and lanthanide elements.

4. The method for producing a silicon nitride honeycomb filter according to Claim 1, 2 or 3, wherein the oxide ceramic hollow particles have a softening point or a liquid phase-forming temperature of at least 1,500°C when the oxide ceramic hollow particles are measured alone.

5. The method for producing a silicon nitride honeycomb filter according to Claim 1, 2, 3 or 4, wherein the oxide of the oxide ceramic hollow particles contains Al₂O₃ and/or SiO₂ as the main component, and the inorganic particles contain MgO analogue particles and CaO analogue particles.

6. The method for producing a silicon nitride honeycomb filter according to any one of Claims 1 to 5, wherein the green body contains organic polymer particles.

7. The method for producing a silicon nitride honeycomb filter according to any one of Claims 1 to 6, wherein the green body comprises from 43 to 68 mass% of metal silicon particles having an average particle diameter of from 5 to 50 µm and from 10 to 35 mass% of oxide ceramic hollow particles having an average particle diameter of from 20 to 80 µm, and the total amount of the metal silicon particles, the oxide ceramic hollow particles and the inorganic particles is at least 80 mass%.

8. The method for producing a silicon nitride honeycomb filter according to any one of Claims 1 to 7, wherein the silicon nitride honeycomb filter has a porosity of from 50 to 80% and an average pore diameter of from 15 to 30 µm as measured by a mercury injection method, and the total of pore volumes of pores having pore diameters of at least 5 µm, is at least 80% of the total of pore volumes of all pores.
